# EUROPEAN PATENT APPLICATION

(11) **EP 2 690 430 A1**
(43) Date of publication of application: **29.01.2014**
(21) Application number: 12760388.4
(22) Date of filing: 15.03.2012
(51) Int. Cl.: G01N 21/85

(54) **TABLET INSPECTION DEVICE AND TABLET INSPECTION METHOD USING SAME**

(30) Priority: 24.03.2011 JP 2011065560
(71) Applicant: Panasonic Corporation, Osaka 571-8501 (JP)
(72) Inventor: TANIMOTO, Takanobu, Osaka 540-6207 (JP); YAMASHITA, Hitoshi, Osaka 540-6207 (JP); GOTUO, Makoto, Osaka 540-6207 (JP); MATSUKAWA, Yoshihiko, Osaka 540-6207 (JP)
(74) Representative: Grünecker, Kinkeldey, Stockmair & Schwanhäusser
(86) International application number: PCT/JP2012/001828
(87) International publication number: WO 2012/127827

(57) **Abstract**

A tablet inspection apparatus (11) includes: a transmitted illumination unit (14) configured to emit infrared light to a medicine packet made of two films which enclose one or more tablets from a side of one of the two films, one of the two films having a printed portion, and the one or more tablets having lower absorption rate of infrared light than the printed portion; a reflected illumination unit (13) configured to emit infrared light from a side of the other of the two films; a camera unit (15) configured to obtain a transmission image by imaging the medicine packet from the side of the other, in a state where the transmitted illumination unit (14) is emitting infrared light and the reflected illumination unit (13) is not emitting infrared light, and obtain a reflection image by imaging the medicine packet from the side of the other, in a state where the reflected illumination unit (13) is emitting infrared light and the transmitted illumination unit (14) is not emitting infrared light; and a calculation unit (16) configured to generate an inspection image from a difference image between the reflection image and the transmission image.

## Description

### [Technical Field]

The present invention relates to a tablet inspection apparatus for supporting an inspection of tablets enclosed in a medicine packet and a tablet inspection method using the tablet inspection apparatus.

### [Background Art]

Prescription work at a hospital facility, a pharmacy, and the like requires precise dispensing of medicines according to a prescription. Therefore, in the hospital facility, the pharmacy, and the like, an inspection is performed after the prescription work. An example of a medicine subject to the prescription work is a tablet. The inspection of tablets is performed on a medicine packet including tablets by counting the number of tablets enclosed in the medicine packet using a tablet packaging machine. When the tablet inspection is performed in this way, it is difficult to distinguish between (i) a printed portion of the medicine packet such as letters, designs, and patterns, and (ii) tablets. Because of this, there are cases where the number of tablets cannot be accurately counted. A tablet inspection apparatus is proposed for generating an inspection image of the medicine packet in which the printed portion is deleted while the tablets are retained to inspect tablets in the medicine packet with the use of the inspection image (for example, refer to Patent Literature 1).

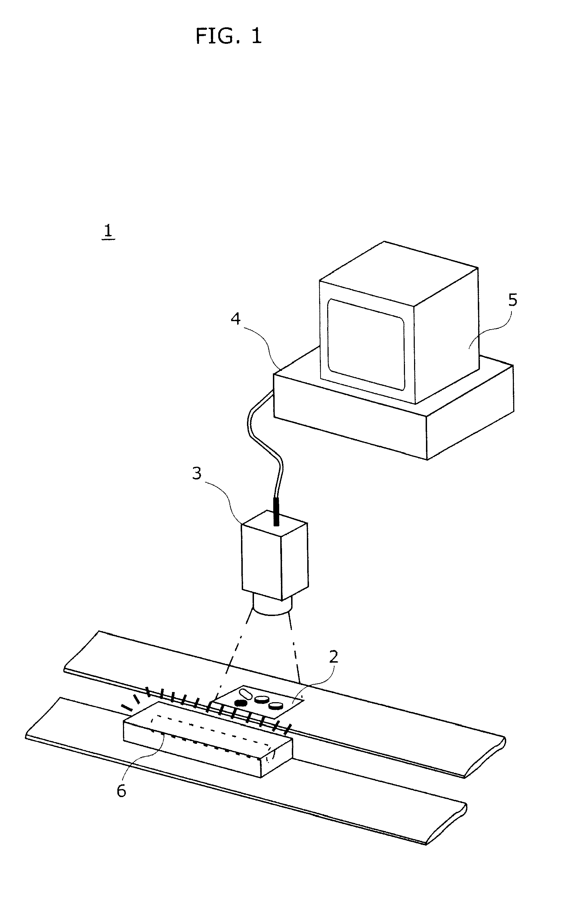

FIG. 1 is a perspective view of a conventional tablet inspection apparatus 1.

The tablet inspection apparatus 1 performs binarization processing, contraction processing, and expansion processing, in this order, on a transmission image of a medicine packet 2 captured by a camera 3, to remove noise in the transmission image. With this, the tablet inspection apparatus 1 generates the inspection image of the medicine packet from which the printed portion is deleted.

The tablet inspection apparatus 1 includes the camera 3 which captures an image of the medicine packet 2 located in an inspection position, an illuminator 6 disposed at a position below the camera 3, an image processing unit 4 which performs an image processing on the transmission image having a gray scale that is captured by the camera 3, and a display 5 which is connected to the image processing unit 4.

The image processing unit 4 calculates a binarized image after taking in the transmission image captured by the camera 3 and binarizing the transmission image with a predetermined threshold. The image processing unit 4 performs, on the binarized image, noise removal processing including contraction and expansion, to delete the printed portion on the medicine packet 2.

The tablet inspection apparatus 1 counts the number of tablets from the inspection image in which the printed portion is deleted, and determines whether or not the total number of tablets is appropriate to be enclosed in the medicine packet. In this way, the tablet inspection apparatus 1 automatically inspects tablets in the medicine packet.

Moreover, a tablet inspection apparatus is proposed for extracting tablets using reflected illumination of slit light (for example, refer to Patent Literature 2).

### [Citation List]

### [Patent Literature]

[PTL 1]
   Patent Literature 1: Japanese Unexamined Patent Application Publication No. 9-231342
[PTL2]
   Patent Literature 2: Japanese Unexamined Patent Application Publication No. 7-204253

### [Summary of Invention]

### [Technical Problem]

However, the conventional tablet inspection apparatus 1 cannot delete, from the inspection image, the printed portion having high light absorption rate and a printed portion with thick lines. The printed portion included in the transmission image has high light absorption rate while the tablets do not transmit light. Therefore, the brightness, in the transmission image, of the printed portion and the tablets both decreases (and pixel values are smaller). When binarization processing is performed on the transmission image, the printed portion becomes black pixels. Therefore, in the conventional tablet inspection apparatus 1, the printed portion still remains as black pixels as similarly to the tablets in the inspection image. Moreover, when the printed portion is composed of design or pattern, the width of the line of the printed portion is greater. Therefore, even when the binarized image generated through binarization of the transmission image is contracted and expanded, it is impossible to delete the printed portion from the binarized image. As a result, when the printed portion is composed of design or pattern, the printed portion still remains in the inspection image.

As described above, even when the transmission image is binarized and then noise is removed from the binarized image by contraction and expansion, the printed portion still remains in a part of the inspection image in the case where the printed portion has high light absorption rate and the width of the line of the printed portion is large. Therefore, the conventional tablet inspection apparatus has a problem that it cannot accurately count the number of tablets enclosed in the medicine packet.

The present invention is conceived to solve the aforementioned problem. An object of the present invention is to provide a tablet inspection apparatus and a tablet inspection method that can accurately count the number of tablets enclosed in the medicine packet.

### [Solution to Problem]

In order to attain the above mentioned goal, a tablet inspection apparatus according to an aspect of the present invention includes: a placing unit on which a medicine packet made of two films which enclose at least one or more tablets is placed, one of the two films having a printed portion, the one or more tablets having lower absorption rate of infrared light than the printed portion; a transmitted illumination unit configured to emit infrared light; a reflected illumination unit configured to emit infrared light; a camera unit configured to: obtain a transmission image by imaging the medicine packet from a side of the other of the two films, in a state where the transmitted illumination unit is emitting infrared light to the medicine packet from a side of the one of the two films; and obtain a reflection image by imaging the medicine packet from the side of the other, in a state where the reflected illumination unit is emitting infrared light to the medicine packet from the side of the other; and a calculation unit configured to: generate an inspection image from a difference image between the reflection image and the transmission image; and inspect the one or more tablets based on the inspection image.

A tablet inspection method according to another aspect of the present invention includes: preparing a medicine packet made of two films which enclose at least one or more tablets, one of the two films having a printed portion, the one or more tablets having lower absorption rate of infrared light than the printed portion; obtaining a transmission image by imaging the medicine packet from a side of the other of the two films, in a state where the transmitted illumination unit is emitting infrared light to the medicine packet from a side of the one of the two films; obtaining a reflection image by imaging the medicine packet from the side of the other, in a state where the reflected illumination unit is emitting infrared light to the medicine packet from the side of the other; and generating an inspection image from a difference image between the reflection image and the transmission image, and inspecting the one or more tablets based on the inspection image.

### [Advantageous Effects of Invention]

The present invention makes it possible to provide the tablet inspection apparatus which can accurately count the number of tablets enclosed in the medicine packet and the tablet inspection method using the same.

### [Brief Description of Drawings]

[Fig. 1]
   FIG. 1 is a perspective view of a conventional tablet inspection apparatus.
[Fig. 2]

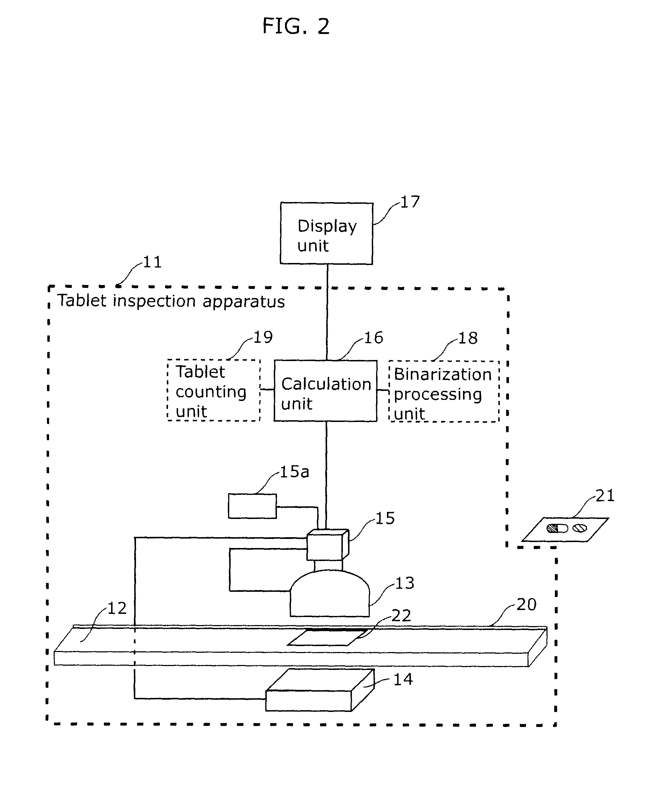

   FIG. 2 is a block diagram schematically illustrating the configuration of a tablet inspection apparatus according to Embodiment 1 of the present invention.
[Fig. 3]

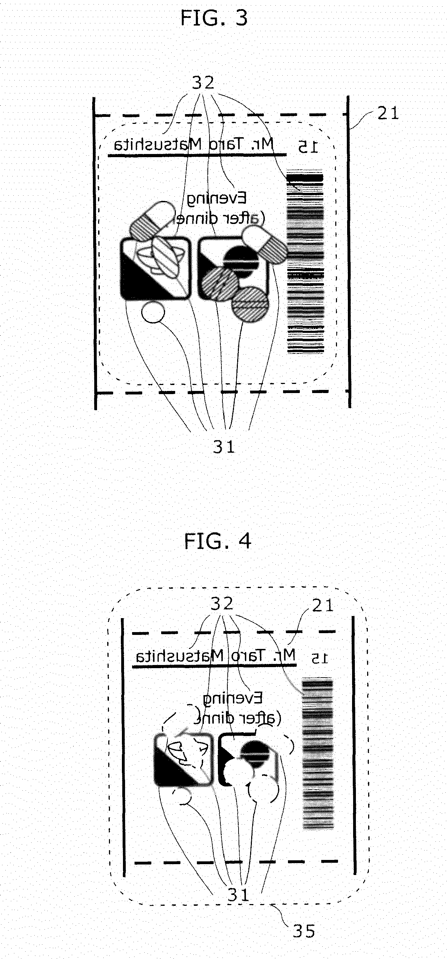

   FIG. 3 is a plan view of a medicine packet according to Embodiment 1 of the present invention.
[Fig. 4]
   FIG. 4 is a diagram showing an example of an image in which binarization is performed on a reflection image of a medicine packet captured by a camera unit according to Embodiment 1 of the present invention.
[Fig. 5]

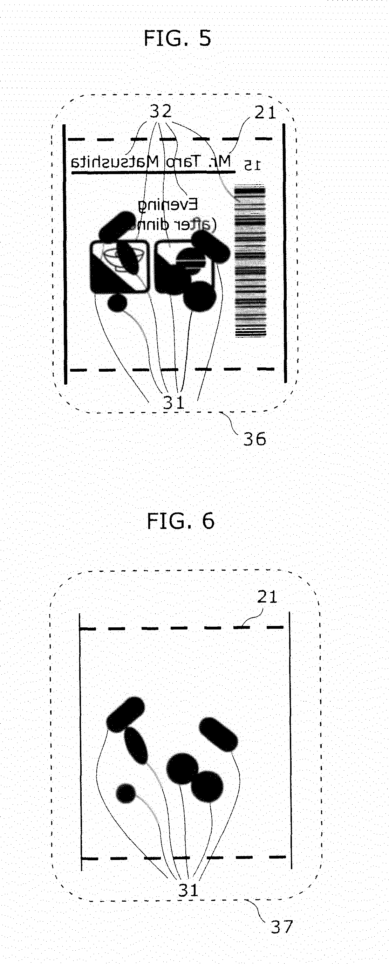

   FIG. 5 is a diagram showing an example of an image after binarization is performed on a transmission image of a medicine packet captured by a camera unit according to Embodiment 1 of the present invention.
[Fig. 6]
   FIG. 6 is a diagram showing an example of an inspection image of a medicine packet according to Embodiment 1 of the present invention.
[Fig. 7]

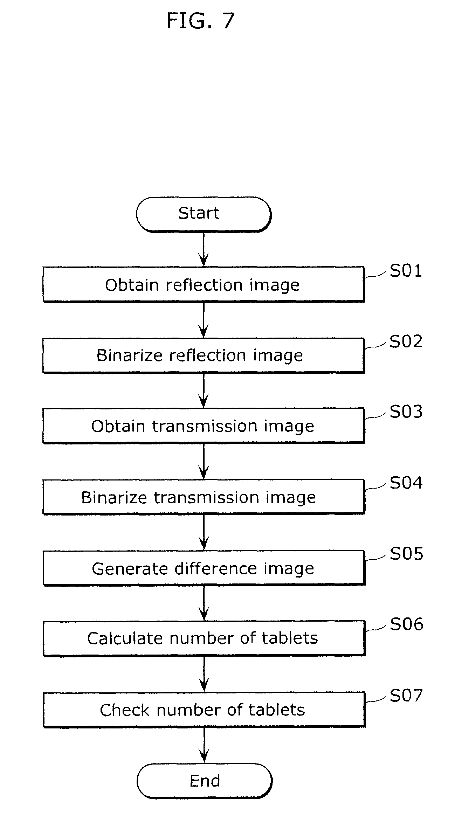

   FIG. 7 is a flowchart showing a method of inspecting tablets using the tablet inspection apparatus according to Embodiment 1 of the present invention.
[Fig. 8]

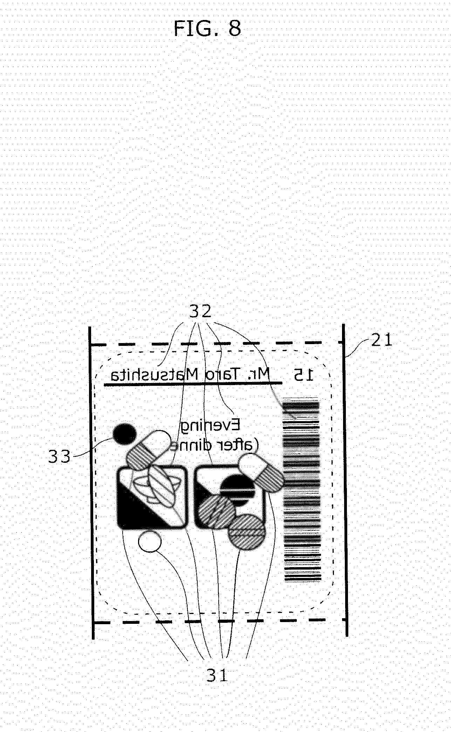

   FIG. 8 is a diagram showing an example of a reflection image of a medicine packet captured by a camera unit according to Embodiment 2 of the present invention.
[Fig. 9]

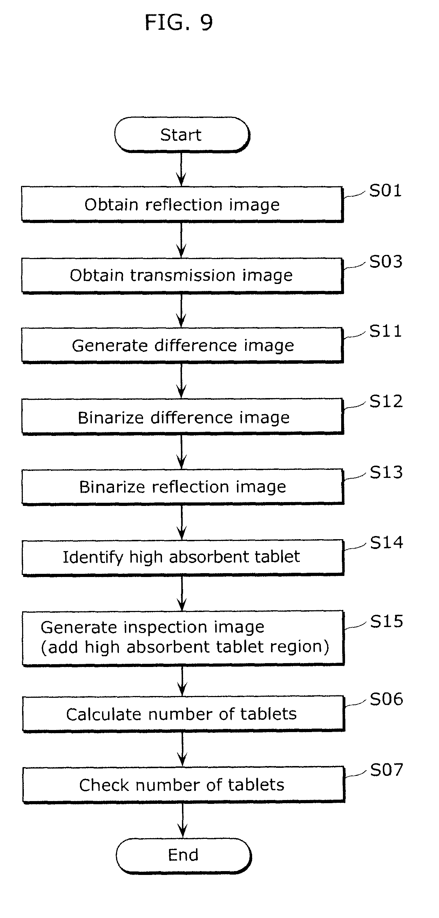

   FIG. 9 is a flowchart showing a method of inspecting tablets using the tablet inspection apparatus according to Embodiment 2 of the present invention.
[Fig. 10]

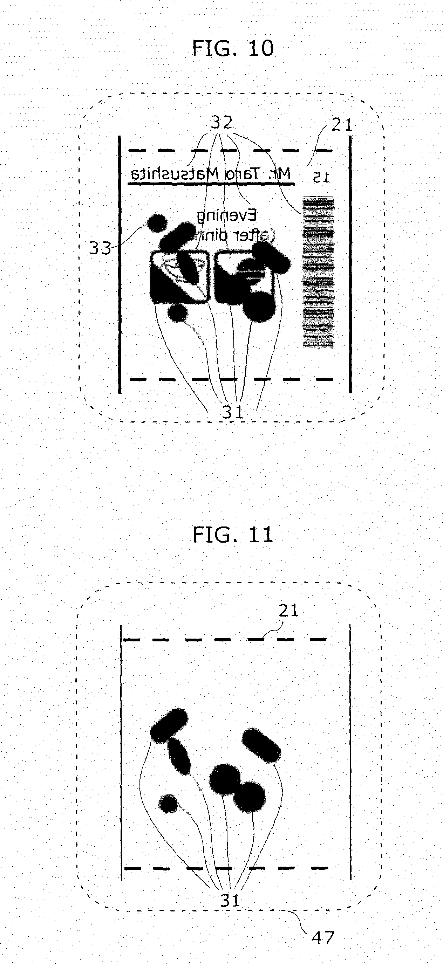

   FIG. 10 is a diagram showing an example of a transmission image of a medicine packet captured by the camera unit according to Embodiment 2 of the present invention.
[Fig. 11]
   FIG. 11 is a diagram showing an example of an image after binarization is performed on a difference image according to Embodiment 2 of the present invention.
[Fig. 12]

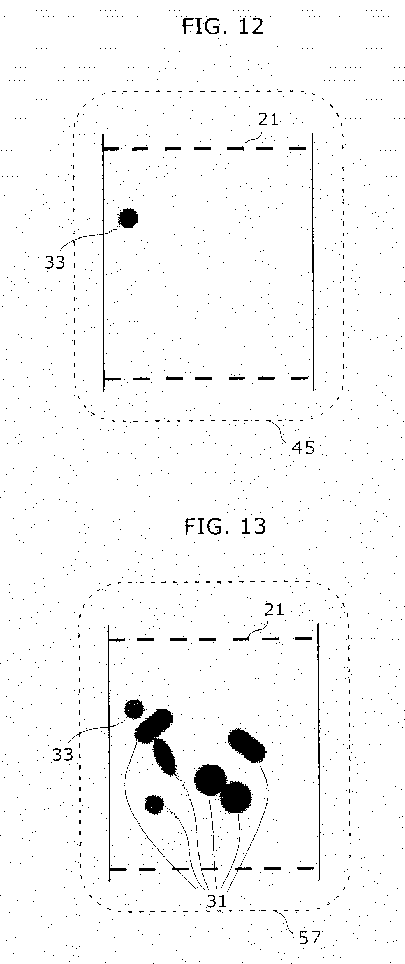

   FIG. 12 is a diagram showing an example of an image showing a high absorbent tablet region according to Embodiment 2 of the present invention.
[Fig. 13]
   FIG. 13 is a diagram showing an example of an image showing an inspection image according to Embodiment 2 of the present invention.

### [Description of Embodiments]

### [Embodiment 1]

The following will describe the embodiments with reference to the drawings. It should be noted that the embodiments to be described later show a preferable specific example of the present invention. Numerals, shapes, materials, constituent elements, arrangement position and connection forms of the constituent elements, steps, and an order of steps are examples, and they are not intended to limit the present invention.

It should be noted that the same reference signs are assigned to the same constituent elements, and therefore there is a case where a description thereof is omitted. Moreover, each of the constituent elements is mainly and schematically shown such that the drawings are easier to understand.

### [Embodiment 1]

FIG. 2 is a block diagram schematically illustrating a tablet inspection apparatus 11 according to Embodiment 1 of the present invention. The tablet inspection apparatus 11 is an apparatus which deletes a printed portion from an image of a medicine packet 21 having the printed portion, to generate an inspection image including tablets. Furthermore, the tablet inspection apparatus 11 is also an apparatus which automatically performs tablet inspection on whether or not the number of tablets enclosed in the medicine packet 21 is appropriate by counting the number of tablets, based on the inspection image. It should be noted that the printed portion includes a portion on which not only letters but also figures, signs, or the like are printed.

As shown in FIG. 2, the tablet inspection apparatus 11 according to Embodiment 1 includes a placing board 12 on which the medicine packet 21 is placed, a reflected illumination unit 13 which illuminates the placing board 12, a transmitted illumination unit 14 which emits light to the placing board 12 from the opposite side of the reflected illumination unit 13 with the placing board 12 interposed therebetween, a camera unit 15, and a calculation unit 16. The placing board 12 is an example of the placing unit.

Moreover, a display unit 17 may be included in the tablet inspection apparatus 11 to show a calculation result from the calculation unit 16.

The medicine packet 21 encloses tablets between a white film (one of the films) and a transparent film (the other film). The white film is a film having high infrared light transmittance. In the white film, coating is performed on the white display plane that is printable. The medicine packet 21 includes a printed portion on which ink having high absorption rate of infrared light is printed on the white film. More specifically, it is determined that the printed portion has higher absorption rate of infrared light than tablets enclosed in the medicine packet 21. Having high absorption rate of infrared light means that the light absorption rate is high in a wavelength range of infrared light, and the transmittance and reflection rate of infrared light are low. Ink having high absorption rate of infrared light includes ink made mainly of such pigment as carbon black. Carbon black has high absorption rate in a wavelength range of infrared light and a wavelength range of visible light. Moreover, a difference between the absorption rate of carbon black and the absorption rate of tablets is larger in a wavelength range of infrared light. The use of such ink in the printed portion allows the absorption rate of infrared light in the printed portion to be higher than the absorption rate of infrared light of tablets enclosed in the medicine packet 21 and the white film. Moreover, the printed portion is often printed when tablets are enclosed in the medicine packet 21. Examples of the printed portion include a name of a patient, a time when tablets are taken, a medicine packet number, a bar code, and the like. It should be noted that one of the films is described as the white film, but a colored film is also acceptable.

The placing board 12 is a board on which the medicine packet 21 including the printed portion is placed. The placing board 12 includes a guide unit 20 and a transparent plate 22 which is located between a camera unit 15 and a transmitted illumination unit 14.

The guide unit 20 includes drive rollers and guide rollers that are not illustrated. By rotating the drive rollers while each of the end portions of the medicine packet 21 is being sandwiched between the drive rollers and the guide rollers, the medicine packet 21 is shifted along the guide unit 20.

Moreover, the transparent plate 22 of the placing board 12 transmits illuminated light (infrared light) from the transmitted illumination unit 14 that is located below. The position of the transparent plate 22 is also a position where the medicine packet 21 captured by the camera unit 15 is placed.

With this configuration, the transmitted illumination unit 14 emits infrared light to the medicine packet 21 from the side of the white film. Moreover, the reflected illumination unit 13 emits infrared light to the medicine packet 21 from the side of the transparent film.

The camera unit 15 is a camera which obtains a reflection image by capturing an image of the medicine packet 21 to which light is being emitted by the reflected illumination unit 13. Moreover, the camera unit 15 is a camera which obtains a transmission image by capturing an image of the medicine packet 21 to which light is being emitted by the transmitted illumination unit 14. It should be noted that when the reflected illumination unit 13 is emitting light, the transmitted illumination unit 14 is not emitting light. Moreover, when the transmitted illumination unit 14 is emitting light, the reflected illumination unit 13 is not emitting light. A switch between the illuminated light of the reflected illumination unit 13 (infrared light) and the illuminated light of the transmitted illumination unit 14 (infrared light) is performed by a control unit 15a included in the camera unit 15.

When an image is captured, the transparent film of the medicine packet 21 is located on the side of the camera unit 15. In other words, the white film of the medicine packet 21 is located on the side of the transparent plate 22 of the placing board 12 (on the side of the transmitted illumination unit 14). Moreover, the imaging lens of the camera unit 15 is located above the reflected illumination unit 13 that is cylindrical. Moreover, the camera unit 15 is located opposed to the transmitted illumination unit 14 with the placing board 12 interposed therebetween.

The calculation unit 16 generates the inspection image from a difference between the reflection image and the transmission image.

The illuminated light of the reflected illumination unit 13 and the illuminated light of the transmitted illumination unit 14 are infrared light. The infrared light is light having a wavelength range of greater than or equal to 700 nm. It should be noted that the imaging resolution of infrared light in a normal camera is only a range of near infrared light. Therefore, it is assumed that the infrared light of the reflected illumination unit 13 and the transmitted illumination unit 14 according to Embodiment 1 is infrared light having a wavelength with a wavelength range of 750 nm to 950 nm. More specifically, the infrared light of the reflected illumination unit 13 and the transmitted illumination unit 14 may be infrared light having a wavelength of 850 nm.

It should be noted that a reason why infrared light is used as illuminated light is that generally, carbon black having high absorption rate of infrared light is frequently used as ink of the printed portion of the medicine packet 21. Another reason why infrared light is used as illuminated light is that general tablets reflect infrared light. Many of the general tablets do not reflect visible light. Therefore, infrared light in used in Embodiment 1 such that the tablet inspection apparatus 11 can be used also for general tablets.

In this configuration, since tablets reflect infrared light, the brightness of tablets included in the reflection image is high (pixel value is large). Moreover, since in this configuration, tablets do not transmit infrared light, the brightness of tablets included in the transmission image is low (pixel value is small). Meanwhile, since the ink of the printed portion absorbs infrared light, the brightness of the printed portion in the reflection image and the transmission image decreases (pixel value is small). The tablet inspection apparatus 11 according to Embodiment 1 can generate the inspection image in which tablets are included but the printed portion is deleted, by using the difference between the reflection image having low brightness of the printed portion and the transmission image having low brightness of the printed portion and tablets. It should be noted that the present description does not distinguish the brightness from the pixel value and there are cases where the brightness means the pixel value.

The tablet inspection apparatus 11 further includes a binarization processing unit 18 which binarizes the image obtained by the camera unit 15. The binarization processing unit 18 compares the brightness with the threshold for each of the pixels included in an image. The binarization processing unit 18 binarizes by determining that a pixel having brightness that is greater than or equal to the threshold is a white pixel (for example, a pixel of a pixel value 255) and a pixel having brightness that is less than the threshold is a black pixel (for example, a pixel of a pixel value 0). The calculation unit 16 retains a desired region and deletes the other region to generate the inspection image. The desired region is a region in which the brightness of the transmission image binarized by the binarization processing unit 18 is low and the brightness of the reflection image binarized by the binarization processing unit 18 is high. In the inspection image, the printed portion is deleted and only the tablets are retained. A reason why the printed portion is deleted will be described later.

The tablet inspection apparatus 11 further includes a tablet counting unit 19. The tablet counting unit 19 counts the number of tablets included in the inspection image.

With this configuration, the tablet inspection apparatus 11 can calculate the number of tablets included in the inspection image and can automatically inspect whether or not an appropriate number of tablets are included in the medicine packet 21.

Here, a reason why the printed portion is deleted by generating the inspection image from the transmission image and the reflection image with the use of the tablet inspection apparatus 11 will be described.

FIG. 3 is a plan view of the medicine packet 21 according to Embodiment 1.

The medicine packet 21, as shown in FIG. 3, allows for viewing a plurality of tablets 31 and the printed portion 32 which is printed on the white film from the side of the transparent film of the medicine packet 21. The tablet inspection apparatus 11 obtains the transmission image and the reflection image by capturing an image of the medicine packet 21 with the camera unit 15, and binarizes the obtained transmission image and obtained reflection image with the binarization processing unit 18. It should be noted that FIG. 3 is also a reflection image which is captured by the camera unit 15 and binarization is not performed on.

FIG. 4 is a diagram showing an example of a reflection image 35 according to Embodiment 1. The reflection image 35 is an image generated after binarization is performed on the reflection image of the medicine packet 21 captured by the camera unit 15. FIG. 5 is a diagram showing an example of a transmission image 36 according to Embodiment 1. The transmission image 36 is an image generated after binarization is performed on the transmission image of the medicine packet 21 captured by the camera unit 15.

As shown in FIG. 4, the binarized reflection image 35 looks as if the image of the tablets 31 disappeared and only the image of the printed portion 32 existed. This is because the printed portion 32 is printed with ink having high absorption rate of infrared light and the brightness of the printed portion 32 in the reflection image 35 decreases after the absorption of infrared light. Furthermore, since the reflection image 35 is binarized with a predetermined threshold, the image of the printed portion 32 having low brightness turns black. Meanwhile, since the tablets 31 reflect, on the surfaces, the infrared light of the reflected illumination unit 13, the brightness for each of the tablets 31 in the reflection image 35 increases. Furthermore, since the reflection image 35 is binarized with a predetermined threshold, the images of the tablets 31 having high brightness turn white.

As shown in FIG. 5, the binarized transmission image 36 of the medicine packet 21 looks as if the images of the printed portion 32 and the tablets 31 existed. This is because the printed portion 32 has high absorption rate of infrared light which is emitted to the medicine packet 21 from the transmitted illumination unit 14, and the brightness of the printed portion 32 in the transmission image 36 decreases. Moreover, since the tablets 31 do not transmit infrared light of the transmitted illumination unit 14, the brightness of the tablets 31 in the transmission image 36 decreases. Furthermore, since the transmission image 36 is binarized with a predetermined threshold, the images of the printed portion 32 and the tablets 31 which have low brightness in the transmission image 36 turn black.

It should be noted that since the white film has high transmittance, the brightness of the white film is high for the reflection image 35 and the transmission image 36. When the images are binarized, the images showing the white film turn white. Therefore, the image of the white film is deleted from the generated inspection image.

Moreover, when, along with the printed portion 32, a high transmittance printed portion using ink having high transmittance is printed, the high transmittance printed portion has high brightness in the reflection image 35 and the transmission image 36. When the images are binarized, the image showing the high transmittance printed portion turns white. Therefore, the high transmittance printed portion is deleted from the binarized inspection image. Since in the case of color printing, a material for reflecting only a wavelength of a specific color is often printed, there are many cases where the infrared light transmittance in the color printed portion is high. It should be noted that the high transmittance printed portion is an example of a second printed portion.

Here, consider the case where the printed portion 32 does not have high absorption rate or high transmittance of infrared light. In this case, since the infrared light transmittance is not high for the printed portion 32, the brightness of the printed portion 32 is low in the transmission image 36. Moreover, since the absorption rate of infrared light is not high for the printed portion 32, the brightness of the printed portion 32 is high in the reflection image 35. Therefore, the brightness of the printed portion 32 is equal to the brightness of the tablets 31 in both the transmission image 36 and the reflection image 35. In this case, it is impossible for only the printed portion 32 to be deleted.

However, in the present embodiment, as described above, the absorption rate of infrared light in the printed portion 32 is set to be high. Therefore, in the binarized reflection image 35, the image of the region showing the printed portion 32 turns black while the images of the region showing the tablets 31 turn white. Meanwhile, in the binarized transmission image 36, the image of the region showing the printed portion 32 and the images of the regions showing the tablets 31 turn black. Therefore, by deleting the region showing the printed portion 32 using the difference between the transmission image 36 and the reflection image 35, the inspection image in which the region showing the tablets 31 are retained can be generated. At this time, in the binarized reflection image 35 and the binarized transmission image 36, only black pixels and white pixels are retained. When the calculation unit 16 generates the inspection image from the reflection image 35 and the transmission image 36, the inspection image is generated by determining that pixels which are black in the transmission image 36 are black and white in the reflection image 35 are black pixels and that the remaining pixels are white pixels.

FIG. 6 is a diagram showing an inspection image 37 of the medicine packet 21 according to Embodiment 1. As shown in FIG. 6, the images of the tablets 31 exist in the inspection image 37 of the medicine packet 21, but the image of the printed portion 32 is deleted.

Specifically, the calculation unit 16 performs the following process. The black pixels in the transmission image 36 and the reflection image 35 represent the printed portion 32 that absorbs infrared light. Therefore, the calculation unit 16 determines that the black pixels in the transmission image 36 and the reflection image 35 are white pixels in the inspection image 37. Moreover, the pixels which are black in the transmission image 36 and white in the reflection image 35 represent the tablets 31 which do not transmit infrared light but reflect infrared light. Therefore, the calculation unit 16 determines that the pixels which are black in the transmission image 36 and white in the reflection image 35 are black pixels in the inspection image 37. Furthermore, since the white pixels in the transmission image 36 transmit infrared light, the white pixels are portions that are neither the printed portion 32 nor the tablets 31. Therefore, the calculation unit 16 determines that the white pixels in the transmission image 36 are white pixels in the inspection image 37 regardless of whether the pixels of the reflection image 35 are white and black.

With the process, the black pixels in the inspection image 37 can be applied to only the case where a combination of pixels of the transmission image 36 and pixels of the reflection image 35 represents tablets 31. With this, the images of the tablets 31 existing only in the transmission image 36 remain as black pixels in the inspection image 37, and the images of the printed portion 32 existing in both the reflection image 35 and the transmission image 36 are deleted from the inspection image 37. Moreover, with the process, even when the illumination levels are not accurately adjusted for the transmitted illumination unit 14 and the reflected illumination unit 13, the printed portion which remains in the reflection image 35 and the transmission image 36 on which binarization processing is performed becomes black pixels.

In the above description, when the pixel having a pixel value that is greater than or equal to a threshold on the image is binarized, the pixel is a white pixel. When the pixel having a pixel value that is less than a threshold is binarized, the pixel is a black pixel. However, the relationship between the white pixel and the black pixel may be reversed. In this case, the pixel having a pixel that is greater than or equal to a threshold (pixel having high brightness) is a black pixel, while the pixel that is less than a threshold (pixel having low brightness) is a white pixel. Moreover, in this case, the calculation unit 16 determines that only in the case of a combination of pixels representing the tablet 31 (the case of a white pixel in the transmission image 36 and a black pixel in the reflection image 35), it is determined that the pixel in the inspection image is a black pixel. Moreover, in this case, the calculation unit 16 determines that the other combinations are white pixels in the inspection image. As described above, even when the relationship in the binarization between the white pixel and the black pixel is reversed, it is possible for the inspection image including only the tablets 31 to be calculated.

It should be noted that in the combination of pixels representing the tablet 31, the pixels of the inspection image 37 may be white pixels instead of black pixels. In this way, when the pixel having a pixel value that is greater than or equal to a threshold in binarization is a white pixel, the combination of pixels representing the tablet 31 is a combination of black pixels in the transmission image 36 and white pixels in the reflection image 35. Therefore, the calculation unit 16 determines that in only the combination, the pixels of the inspection image 37 are white pixels. In the case of the other combinations, the calculation unit 16 determines that pixels of the inspection image 37 are black pixels. In this way, when the pixel having a pixel value that is greater than or equal to a threshold is a white pixel in the binarization process, it is possible for the inspection image 37 which is not affected by the printed portion to be calculated, by causing the tablets to remain as white pixels and to remain the other pixels as black pixels.

It should be noted that in the case of a combination of pixels representing the tablet 31, it is possible to retain the pixel value of the reflection image 35 or the transmission image 36 in the inspection image 37 instead of the pixel value of the black pixel in the inspection image 37. When the pixel having a pixel value that is greater than or equal to a threshold in binarization is remained as a white pixel, the combination of pixels representing the tablet 31 is a combination of black pixels in the transmission image 36 and white pixels in the reflection image 35. Therefore, only in this case, the pixel value of the reflection image 35 or the transmission image 36 is retained in the inspection image 37. In the case of the other combinations, the maximum value or minimum value of the pixel value in the reflection image 35 or the transmission image 36 is remained in the inspection image 37. With this, it is possible for the tablet 31 to be indicated by the pixel value of the reflection image 35 or the transmission image 36, and for the remainder to be indicated by the maximum value or minimum value of the pixel value of the reflection image 35 or the transmission image 36. With this, it is possible for the inspection image 37 that can be checked by eyes to be calculated without an influence of the printed portion 32. Moreover, with the process, even when the illumination levels are not accurately adjusted for the transmitted illumination unit 14 and the reflected illumination unit 13, the printed portion which remains in the reflection image 35 and the transmission image 36 on which binarization processing is performed becomes black pixels.

With this configuration, when the inspection image 37 shown in FIG. 6 is generated by deleting the region having low brightness using the reflection image 35 and the transmission image 36 as shown in FIGS. 4 and 5, respectively (region having pixels having pixel values that are less than a threshold), it is possible for the inspection image 37 in which the printed portion is deleted but the tablets are included to be generated. Furthermore, in the configuration according to the present embodiment, even when the brightness level of a region showing the printed portion in the reflection image before binarization is different from the brightness level of a region showing the printed portion in the transmission image before binarization, it is possible for both regions to have the equal brightness level by binarization. With this, even when the illumination levels are not accurately adjusted for the transmitted illumination unit 14 and the reflected illumination unit 13, it is possible for the inspection image 37 in which the printed portion is deleted and the tablets are included to be generated.

After the processes are performed, the tablet counting unit 19 calculates the number of tablets 31 included in the inspection image 37, and inspects whether or not appropriate tablets are included in the medicine packet 21. At this time, the printed portion 32 is deleted in the inspection image 37. Therefore, since the tablet counting unit 19 does not erroneously count the printed portion 32 as a tablet 31, the tablet inspection apparatus 11 can accurately inspect tablets.

In this way, by generating the inspection image 37 using the reflection image 35 and the transmission image 36 based on infrared light, the tablet inspection apparatus 11 according to Embodiment 1 generates the inspection image 37 in which the tablets 31 is retained and the printed portion 32 is deleted. Moreover, the tablet inspection apparatus 11 can accurately inspect tablets using the inspection image 37.

Furthermore, in order to generate an accurate inspection image 37, as shown in FIG. 2, it is desirable that the shape of the reflector of the reflected illumination unit 13 is in a dome shape and reflects infrared light. It should be noted that the shape of the reflector of the reflected illumination unit 13 may, rather than the dome shape, be semi-sphere, that is, a shape in which the sphere is divided in half.

With the configuration using the dome-shaped reflector, the reflected illumination unit 13 can emit light to the tablets 31 from a plurality of directions. Therefore, with the configuration using the dome-shaped reflector, specular reflection by the film of the medicine packet 21 (packaging sheet) can be reduced. Therefore, it is possible for the printed portion 32 to be more accurately deleted from the inspection image 37. Moreover, since with the configuration using the dome-shaped reflector, light is emitted from a plurality of directions, a possibility can be reduced that shadow is generated by the tablets 31 adjacent to each other. Therefore, the configuration using the dome-shaped reflector allows for more accurately showing the shape of the tablets 31 in the inspection image 37. This is because when light in a vertical direction is emitted from the above to the medicine packet 21, the film of the medicine packet 21 (packaging film) is easy to cause specular reflection. Moreover, this is because when light is emitted from the lateral direction in order to avoid specular reflection, the shadow of the tablets 31 adjacent to each other overlaps with the tablets 31, with the result that the tablets 31 do not reflect light.

The transparent plate 22 in the placing board 12 through which passes illuminated light from the transmitted illumination unit 14 has a louver structure. The transparent plate 22 is an inspection position on which the medicine packet 21 is placed. The transparent plate 22 is a transparent portion in the placing board 12.

The transparent plate 22 having a louver structure is a stacked plate in which the light-transmitting plate and the light-shielding plate are alternately stacked. When light is caused to pass the stacked plate from a perpendicular direction with respect to a stacked direction, light becomes parallel light.

With this configuration, the light of the transmitted illumination unit 14 becomes parallel light and illuminates the medicine packet 21. Therefore, it is possible for the outline of the tablet 31 to avoid blurring and for the transmission image 36 having a more accurate shape of the tablet 31 to be generated. This is because when the light of the transmitted illumination unit 14 is diffusing illuminated light, the outer periphery of the tablet 31 is bright and blurry. In this case, since the accurate image of the tablet 31 is not included in the transmission image 36, the shape of the tablet 31 in the inspection image 37 is not accurate.

It should be noted that the reflection image 35 and the transmission image 36 may be binarized after the difference image is generated, rather than the difference image is generated after the reflection image 35 and the transmission image 36 are binarized. In other words, the tablet inspection apparatus 11 may include a binarization processing unit which binarizes the difference image obtained from the calculation unit 16 such that the inspection image 37 is generated from the difference image, after the difference image between the reflection image 35 and the transmission image 36 is generated.

Moreover, before the generation of the inspection image 37, the calculation unit 16 may perform correction process, on the transmission image or the reflection image that is not binarized, of correcting from the maximum value and the minimum value of the brightness of the image to the maximum value and the minimum value of brightness under ideal conditions. As the correction process, first, the multiplied value for transforming to each of the maximum value and the minimum value of ideal brightness is calculated from the maximum value and the minimum value of brightness of the reflection image. Next, by performing linear approximation on the transformed values for each of the maximum value and the minimum value of brightness of the reflection image, the multiplied value is calculated for transforming the brightness between the maximum value and the minimum value of the brightness of the reflection image. Finally, by multiplying the brightness for each of the pixels in the reflection image by the transformed value of the brightness, the brightness for each of the pixels after correction is obtained. The brightness is also corrected for the transmission image by the same method. By the correction calculation, even when the brightness for each of the images deviates from the brightness range that is originally ideal, it is not necessary for the threshold for use in binarization process of the difference image between the reflection image 35 and the transmission image 36 to be accurately adjusted.

Here, there is a case where an accurate adjustment of the threshold is necessary and it is difficult to clearly separate the tablets 31 from the printed portion 32. This happens because when the exposure time and the intensity of illumination of the camera unit 15 cannot be increased to their respective ideal values, the brightness of the tablets 31 in the reflection image decreases, and the brightness of the tablets 31 is close to the brightness of the printed portion 32 in the difference image between the reflection image and the transmission image that are not binarized. In this case, by correcting to the maximum value and the minimum value of the brightness in which the maximum value and the minimum value of the brightness of the reflection image are ideal, the difference between the brightness of the tablets 31 and the brightness of the printed portion 32 is greater in the difference image and it is possible to separate between the tablets 31 and the printed portion 32. In other words, the threshold does not have to be accurately adjusted. It should be noted that in the reflection image, the brightness of the tablets 31 is higher while the brightness of the printed portion 32 is lower. Meanwhile, the brightness of the tablets 31 is different for each of the tablets 31. However, since the brightness of the tablets 31 is high and the brightness of the printed portion 32 is low, the maximum value and the minimum value of the brightness in the reflection image can be reliably obtained from all the medicine packets 21. Therefore, it is possible to use as a standard value for performing correction process.

Moreover, before the generation of the inspection image 37, the calculation unit 16 may perform correction process on at least one of the transmission image and the reflection image that are not binarized for correcting from the average value of the brightness and the variance of the brightness on the image to the average value of the ideal brightness and the variance of the ideal brightness.

Moreover, in addition to that the tablet counting unit 19 may calculate the number of tablets 31 and automatically inspect the tablets, an inspector may count the number of tablets 31. More specifically, after the calculation unit 16 causes the display unit 17 to display the inspection image 37 and the inspector looks at the inspection image 37 displayed on the display unit 17, tablet inspection may be performed based on the number of tablets 31 and the shapes of the tablets 31.

The method of inspecting tablets using the above described tablet inspection apparatus 11 will be described.

The method of inspecting tablets enclosed in the medicine packet 21 using the tablet inspection apparatus 11 includes the first step of obtaining a transmission image, the second step of obtaining a reflection image, and the third step of generating an inspection image. The first step is a step of using a medicine packet which comprises a transparent film and a white film and has a printed portion, emitting infrared light from the side of the white film to the medicine packet enclosing tablets having absorption rate of infrared light lower than the printed portion while the reflected illumination unit 13 is not emitting infrared light, and then obtaining a transmission image by capturing an image of the medicine packet from the side of the transparent film. The second step is a step of obtaining a reflection image by capturing an image of the medicine packet from the side of the transparent film while the reflected illumination unit 13 is emitting infrared light from the side of the transparent film to the medicine packet while the transmitted illumination unit 14 is not emitting infrared light. The third step is a step of generating the inspection image from a difference image between the reflection image and the transmission image.

When the inspection image 37 is generated by using the difference between the reflection image 35 and the transmission image 36, it is possible for the inspection image 37 in which the tablets are included and the printed portion 32 is deleted to be obtained.

FIG. 7 is a flowchart showing a method of inspecting tablets using the tablet inspection apparatus 11 according to Embodiment 1 of the present invention.

First, after a chain of the medicine packets 21 connected to each other is prepared and the medicine packets 21 are placed on the placing board 12, infrared light is emitted from the reflected illumination unit 13, and the medicine packet 21 located on the inspection position is illuminated from the above of the placing board 12 with infrared light. At this time, only the reflected illumination unit 13 emits light while the transmitted illumination unit 14 does not emit light. At this time, the guide unit 20 fixes the medicine packet 21 such that the medicine packet 21 does not move. While the reflected illumination unit 13 is emitting infrared light to the medicine packet 21, the camera unit 15 captures an image of the medicine packet 21 and obtains a reflection image of the medicine packet 21 (Step S01).

The binarization processing unit 18 binarizes the reflection image of the medicine packet 21 obtained by the camera unit 15 to generate the binarized reflection image 35 (Step S02).

After the binarization is performed in Step S02, the reflected illumination unit 13 stops emission of infrared light and the transmitted illumination unit 14 emits infrared light and illuminates the medicine packet 21 with infrared light from the below of the placing board 12. At this time, the guide unit 20 fixes the medicine packet 21 such that the medicine packet 21 does not move. Under this condition, the camera unit 15 captures an image of the medicine packet 21 (Step S03).

The binarization processing unit 18 binarizes the transmission image of the medicine packet 21 obtained by the camera unit 15 to generate the binarized transmission image 36 (Step S04).

After binarization is performed in Step S04, the transmitted illumination unit 14 stops emission of infrared light. Then the calculation unit 16 generates the inspection image 37 of the medicine packet 21 from the difference image between the reflection image 35 and the transmission image 36 that are binarized (Step S05).

By generating, in this way, the inspection image 37 using the reflection image and the transmission image based on infrared light, the image of the medicine packet 21 in which the printed portion 32 is deleted and the tablets 31 are retained is generated.

The tablet counting unit 19 counts the number of tablets included in the inspection image 37 and calculates the number as the number of the tablets 31 (Step S06).

Furthermore, the tablet counting unit 19 stores the total number of tablets that should be enclosed in the medicine packet 21. The total number of tablets that should be enclosed in the medicine packet 21 is calculated based on the prescription. The tablet counting unit 19 checks whether or not the total number of tablets based on the recorded prescription matches the total number of tablets 31 calculated in Step S05 (Step S07).

When the total number of tablets 31 based on the prescription is different from the total number of tablets 31 calculated in Step S07, the calculation unit 16 causes the display unit 17 to show a message that the total number of tablets based on the prescription does not match the total number of tablets enclosed in the medicine packet 21. Moreover, when the total number of tablets 31 based on the prescription matches the total number of tablets 31 calculated in Step S07, the calculation unit 16 causes the display unit 17 to show a message that the total number of tablets based on the prescription matches the total number of tablets enclosed in the medicine packet 21.

Then the guide unit 20 of the placing board 12 moves, and causes another medicine packet 21 to shift to the inspection position on the transparent plate 22 that is located below the camera unit 15. After that, by repeating Steps S01 to S07 for another medicine packet 21, the tablet inspection is performed on the other medicine packet 21.

It should be noted that in the inspection method using the tablet inspection apparatus 11, the tablet counting unit 19 automatically checks whether or not the number of tablets in the medicine packet 21 is an appropriate number of tablets 31. However, the inspector may visually check the tablets 31 in the medicine packet 21 after the calculation unit 16 causes the display unit 17 to display the inspection image 37 and the inspector looks at the inspection image 37 displayed on the display unit 17.

Moreover, in the above described inspection method using the tablet inspection apparatus 11, binarization of the reflection image is performed (Step S02) before the transmission image 36 is obtained (Step S03). However, binarization of the reflection image may be performed (Step S02) after the transmission image 36 is obtained (Step S03).

Since the print on the white film generally has higher absorption rate of infrared light than the tablets, the brightness of the printed portion is low in both the transmission image and the reflection image. Meanwhile, the brightness of the tablets is low in the transmission image, but is high in the reflection image. Because of this, the above described tablet inspection apparatus 11 according to the embodiment 1 deletes the printed portion by generating the inspection image from the difference image between the transmission image and the reflection image, and generates the inspection image in which only the tablets are retained. Therefore, the total number of tablets enclosed in the medicine packet can be accurately counted from the inspection image.

It should be noted that when the printed portion 32 absorbs light having a predetermined wavelength range that is other than infrared light, it is possible for tablet inspection to be performed also on the medicine packet 21 having the printed portion 32 that absorbs light having a predetermined wavelength range that is other than infrared light. More specifically, by determining that the wavelength range of the emitted light of the reflected illumination unit 13 and the wavelength range of the emitted light of the transmitted illumination unit 14 is a predetermined wavelength range, it is possible for an inspection method using the tablet inspection apparatus 11 according to Embodiment 1 to be implemented.

When the printed portion 32 absorbs light having a predetermined wavelength range other than infrared light, the tablet inspection apparatus 11 includes the following configuration.

The transmitted illumination unit 14 emits light having a predetermined wavelength range from the side of the white film to the medicine packet in which tablets having lower absorption rate of light having a predetermined wavelength range than the printed portion are enclosed between two films having the printed portion on one of the films (white film).

The reflected illumination unit 13 emits light, to the medicine packet, having a predetermined wavelength range from the side of the other film (transparent film) of the two films.

The camera unit 15 obtains a transmission image by capturing an image of the medicine packet from the side of the transparent film while the transmitted illumination unit 14 is emitting light having a predetermined wavelength range and the reflected illumination unit 13 is not emitting light having a predetermined wavelength range. Moreover, the camera unit 15 obtains a reflection image by capturing an image of the medicine packet from the side of the transparent film while the reflected illumination unit 13 is emitting light having a predetermined wavelength range and the transmitted illumination unit 14 is not emitting light having a predetermined wavelength range.

The calculation unit 16 generates an inspection image from the difference image between the reflection image and the transmission image. Next, the number of tablets is checked based on the inspection image.

With this configuration, since the tablets 31 reflect light having a predetermined wavelength range, the brightness of the tablets 31 included in the reflection image is high. Moreover, since the tablets 31 do not transmit light having a predetermined wavelength range, the brightness of the tablets 31 included in the transmission image is low. Meanwhile, the brightness of the printed portion 32 is low in both the reflection image and the transmission image. The tablet inspection apparatus 11 generates the inspection image 37 in which the tablets 31 are included and the printed portion 32 is deleted by using the difference between the reflection image having low brightness of the printed portion 32 and the transmission image having low brightness of the printed portion 32 and the tablets 31.

It should be noted that the above described predetermined wavelength range has a band having a width from 100 nm to 150 nm inclusive.

The method of inspecting tablets using the tablet inspection apparatus 11 includes the first step of obtaining a transmission image, the second step of obtaining a reflection image, and the third step of generating an inspection image. The first step is a step of using a medicine packet which has a printed portion and comprises a transparent film and a white film, and then obtaining a transmission image by capturing an image of the medicine packet from the side of the transparent film, while the transmitted illumination unit 14 is emitting light having a predetermined wavelength range from a side of the white film to the medicine packet enclosing tablets having lower absorption rate of light having a predetermined wavelength range than the printed portion and the reflected illumination unit 13 is not emitting light having a predetermined wavelength range. The second step is a step of obtaining a reflection image by capturing an image of the medicine packet from the side of the transparent film, while the reflected illumination unit 13 is emitting infrared light from the side of the transparent film to the medicine packet and the transmitted illumination unit 14 is not emitting infrared light. The third step is a step of generating the inspection image from the difference image between the reflection image and the transmission image.

With this configuration, when the inspection image 37 is generated by using the difference between the reflection image and the transmission image, it is possible for the inspection image 37 in which the tablets are included and the printed portion 32 is deleted to be obtained.

### [Embodiment 2]

Next, a tablet inspection apparatus according to Embodiment 2 of the present invention will be described. In the above described Embodiment 1, the absorption rate of infrared light is higher for the printed portion of the medicine packet than all the tablets enclosed in the medicine packet. In other words, in the above described Embodiment 1, the absorption rate of infrared light is lower for all the tablets than the printed portion. However, among the tablets, there is a black tablet having absorption rate of infrared light that is higher than that of the printed portion. Hereafter, such a tablet is referred to as a high absorbent tablet. A circanetten (registered trademark) table exists as an example of the high absorbent tablet. The high absorbent tablet is an example of a second tablet.

Since the high absorbent tablet has high absorption rate of infrared light, the high absorbent tablet turns black in both the transmission image and the reflection image. Therefore, in the inspection image obtained from the difference between the transmission image and the reflection image, the high absorbent tablet, along with the printed portion, is deleted. Therefore, when the high absorbent tablet is included in the medicine packet, there is a case where the number of tablets in the medicine packet cannot be accurately counted and an accurate tablet inspection cannot be performed. Therefore, in Embodiment 2, a process of extracting the high absorbent tablet is added.

In the above described Embodiment 1, the inspection image is generated from the difference between the transmission image and the reflection image that are binarized. However, when the transmission image and the reflection image are binarized, there is a case where binarization is not reliable around the edge of the high absorbent tablet. More specifically, since the pixel values of the boundary between the high absorbent tablet and the background is a value close to a binarization threshold, there is a case where the region of the high absorbent tablet is not determined in the edge of the high absorbent tablet. Therefore, there is a case where the region of the high absorbent tablet is not accurately shown in the inspection image. Therefore, in Embodiment 2, the inspection image is generated by binarization of the difference image between the transmission image and the reflection image that are not binarized and by identifying the region of the high absorbent tablet from the binarized reflection image.

A schematic illustration of the tablet inspection apparatus according to Embodiment 2 is the same as the schematic illustration of the tablet inspection apparatus 11 according to Embodiment 1 shown in FIG. 2. However, the difference from the above described Embodiment 1 is an image to be binarized by the binarization processing unit 18 and a process to be performed by the calculation unit 16. Therefore, the description other than the description of the binarization processing unit 18 is omitted.

The image to be binarized by the binarization processing unit 18 is the difference image between the transmission image and the reflection image that are not binarized as described above.

The process performed by the calculation unit 16 will be described by showing an example.

FIG. 8 is a plan view of a medicine packet 21 according to Embodiment 2. The medicine packet 21 is the same as the medicine packet 21 according to Embodiment 1 shown in FIG. 3. The medicine packet 21 is a medicine packet 21 in which a high absorbent tablet 33 is added to the medicine packet 21 shown in FIG. 3. It should be noted that the reflection image which is captured by the camera unit 15 but binarization is not performed on is shown in FIG. 8.

FIG. 9 is a flowchart showing a method of inspecting tablets using the tablet inspection apparatus 11 according to Embodiment 2. Description of the same steps as those shown in FIG. 7 will be omitted by assigning thereto the same step numbers.

The camera unit 15 performs the same process as Step S01 and Step 03 in FIG. 7, and obtains the reflection image and the transmission image (Steps S01 and S03).

The reflection image is an image shown in FIG. 8 and the transmission image is an image shown in FIG. 10. The high absorbent tablet 33 looks black in both images.

The calculation unit 16 generates the difference image between the reflection image obtained in Step S01 and the transmission image obtained in Step S03 (Step S11). In other words, the calculation unit 16 generates the difference image by subtracting, for each of the pixels, the pixel value of the transmission image from the pixel value of the reflection image and by determining the absolute value of the subtraction result as the pixel value of the pixel.

The calculation unit 16 causes the binarization processing unit 18 to binarize the difference image generated in Step S11. The binarization processing unit 18 binarizes the difference image generated in Step S11 (Step S12). FIG. 11 is a diagram showing an example of the image after the difference image is binarized. In a difference image 47 that is binarized, the tablets 31 are shown as black pixels but a printed portion 32 and a high absorbent tablet 33 are deleted. This is because the printed portion 32 and the high absorbent tablet 33 have high absorption rate of infrared light, and have low brightness in both the reflection image and the transmission image. In other words, since, in the difference image 47, the pixel value is smaller for the printed portion 32 and the high absorbent tablet 33, the printed portion 32 and the high absorbent tablet 33 are deleted by binarizing the difference image.

Next, the binarization processing unit 18 binarizes the reflection image obtained in Step S01 (Step S13). By using the binarized reflection image, the printed portion 32 is separated from the high absorbent tablet 33. As described above, the high absorbent tablet 33 has further higher absorption rate of infrared light than the printed portion 32. In other words, in the reflection image, the brightness of the high absorbent tablet 33 is further lower than the brightness of the printed portion 32. Therefore, it is determined that the value of the brightness between the brightness of the high absorbent tablet 33 and the brightness of the printed portion 32 is a threshold. The binarization processing unit 18 binarizes the reflection image by determining that a pixel having brightness that is lower than the threshold is a black pixel and a pixel having brightness that is higher than or equal to the threshold is a white pixel. FIG. 12 is a diagram showing an example of a reflection image 45 that is binarized. The reflection image 45 is an image which shows the region of the high absorbent tablet 33.

The calculation unit 16 identifies the region indicated by the black pixels in the reflection image 45 as the region of the high absorbent 33 (Step S14).

The calculation unit 16 generates the inspection image based on the difference image that is binarized in Step S12 and the region of the high absorbent tablet 33 that is identified in Step S14 (Step S15). In other words, the calculation unit 16 generates the inspection image by replacing pixels located in the same positions as the region of the high absorbent tablet 33 shown in FIG. 12 with black pixels, among the pixels of the difference image 47 shown in FIG. 11. FIG. 13 is a diagram showing an example of the generated inspection image. The printed portion 32 is deleted from the inspection image 57, and the tablets 31 and the high absorbent tablet 33 are included in the inspection image 57.

The tablet counting unit 19 counts the total number of the tablets 31 and the high absorbent tablet 33 in the inspection image 57, and calculates the total number as the number of tablets (Step S06).

Furthermore, the tablet counting unit 19 stores the total number of tablets that should be enclosed in the medicine packet 21 based on the prescription. The tablet counting unit 19 checks whether or not the total number of tablets based on the recorded prescription matches the total number of tablets calculated in Step S05 (Step S07).

As described above, the tablet inspection apparatus 11 according to Embodiment 2 can accurately count the number of tablets without an influence of the printed portion 32 even when the high absorbent tablet 33 having lower absorption rate of infrared light than the printed portion 32 is included in the medicine packet 21.

It should be noted that before the difference image generation process (Step S11), the maximum value and the minimum value of brightness on the image may be corrected to the maximum value and the minimum value of brightness, respectively, that is ideal with respect to at least one of the transmission image and the reflection image.

With this configuration, without accurately adjusting the threshold for binarizing the difference image to the ideal threshold, it is possible for the binarized difference image in which the printed portion 32 is deleted and the tablets 31 are included to be generated.

Moreover, before the difference image generation process (Step S11), the average value of brightness and the variance of brightness on the image may be corrected to the average value of brightness and the variance of brightness on the image that are ideal, with respect to at least one of the transmission image and the reflection image.

With this configuration, without accurately adjusting the threshold for binarizing the difference image to the ideal threshold, it is possible for the binarized difference image in which the printed portion 32 is deleted and the tablets 31 are included to be generated.

Moreover, in Embodiment 2, the process of extracting the high absorbent tablet is described. The process can be applied to Embodiment 1.

The tablet inspection apparatus 11 according to Embodiments 1 and 2 of the present invention has been described. However, the present invention is not limited to the embodiments.

For example, in the above described tablet inspection apparatus 11, the calculation unit 16, the binarization processing unit 18, and the tablet counting unit 19, more specifically, may be configured as a computer system including a microprocessor, a read only memory (ROM), a random access memory (RAM), a hard disk drive, a display unit, a keyboard, a mouse, and the like. A computer program is stored in a RAM or a hard disk drive. By operation of the microprocessor according to a computer program, the tablet inspection apparatus 11 attains its function. The computer program is configured by combination of instruction codes for the computer such that the predetermined function is achieved.

Furthermore, in the above described tablet inspection apparatus 11, a part or all of the calculation unit 16, the binarization processing unit 18, and the tablet counting unit 19 may be configured from a single system Large Scale Integration (LSI). The system LSI is a super-multi-function LSI manufactured by integrating constituent units on one chip, and is specially a computer system configured by including a microprocessor, a ROM, and a RAM, and so on. A computer program is stored in the RAM. The System-LSI achieves its function through the microprocessor's operation according to the computer program.

Furthermore, in the above described tablet inspection apparatus 11, a part or all of the calculation unit 16, the binarization processing unit 18, and the tablet counting unit 19 may be configured as an IC card or a stand-alone module which can be attached or detached from the tablet inspection apparatus 11. The IC card or the module is a computer system configured from a microprocessor, a ROM, a RAM, and so on. The IC card or the module may also be included in the aforementioned super-multi-function LSI. The IC card or the module achieves its function through the microprocessor's operation according to the computer program. The IC card or the module may also be implemented to be tamper-resistant.

Moreover, the present invention may be a method as described above. Moreover, the present invention may be a computer program for realizing the previously illustrated method, using a computer, and may also be a digital signal including the computer program.

The present invention may also be realized by storing the computer program or the digital signal in a computer readable recording medium such as a flexible disc, a hard disk, a CD-ROM, an MO, a DVD, a DVD-ROM, a DVD-RAM, a Blu-ray Disc (BD, registered trademark), a semiconductor memory, and so on. Furthermore, the present invention may also include the digital signal recorded in these storage media.

Moreover, the present invention may also be realized by the transmission of the aforementioned computer program or digital signal via a telecommunication line, a wireless or wired communication line, a network represented by the Internet, a data broadcast, and so on.

The present invention may also be a computer system including a microprocessor and a memory, in which the memory stores the aforementioned computer program and the microprocessor operates according to the computer program.

Furthermore, by transferring the program or the digital signal by recording to the aforementioned recording media, or by transferring the program or digital signal via the aforementioned network and the like, execution using another computer system is also made possible.

Furthermore, the aforementioned embodiments and modifications may be combined.

The disclosed embodiments are examples and should not be considered as limited thereto. The present invention is indicated not by the aforementioned description but by the Claims, and is intended to include all modifications that are equal to the Claims and are within the scope of the Claims.

### [Industrial Applicability]

The tablet inspection apparatus according to the present invention and the tablet inspection method using the apparatus can generate the inspection image in which the tablets are included and the printed portion is deleted. Therefore, the present invention can be applied to a tablet inspection apparatus which automatically inspects tablets by automatically count the number of tablets enclosed in a medicine packet used at pharmacies and hospital facilities, or to a tablet inspection apparatus which helps the inspector visually check tablets by displaying tablets in the medicine packet.

### [Reference Signs List]

- 11: Tablet inspection apparatus
- 12: Placing board
- 13: Reflected illumination unit
- 14: Transmitted illumination unit
- 15: Camera unit
- 16: Calculation unit
- 17: Display unit
- 18: Binarization processing unit
- 19: Tablet counting unit
- 20: Guide unit
- 21: Medicine packet
- 22: Transparent plate
- 31: Tablet
- 32: Printed portion
- 33: High absorbent tablet
- 35, 45: Reflection image
- 36: Transmission image
- 37, 57: Inspection image
- 47: Difference image

## Claims

1. A tablet inspection apparatus comprising:
a placing unit on which a medicine packet made of two films which enclose at least one or more tablets is placed, one of the two films having a printed portion, and the one or more tablets having lower absorption rate of infrared light than the printed portion;
a transmitted illumination unit configured to emit infrared light;
a reflected illumination unit configured to emit infrared light;
a camera unit configured to: obtain a transmission image by imaging the medicine packet from a side of the other of the two films, in a state where the transmitted illumination unit is emitting infrared light to the medicine packet from a side of the one of the two films; and obtain a reflection image by imaging the medicine packet from the side of the other, in a state where the reflected illumination unit is emitting infrared light to the medicine packet from the side of the other; and
a calculation unit configured to: generate an inspection image from a difference image between the reflection image and the transmission image; and inspect the one or more tablets based on the inspection image.

2. The tablet inspection apparatus according to Claim 1, further comprising
a binarization processing unit configured to binarize an image, wherein the calculation unit is configured to generate the inspection image from the difference image binarized by the binarization processing unit.

3. The tablet inspection apparatus according to Claim 1, further comprising
a binarization processing unit configured to binarize an image, wherein the calculation unit is configured to generate the inspection image from the difference image between the reflection image and the transmission image that are binarized by the binarization processing unit.

4. The tablet inspection apparatus according to Claim 3, wherein the calculation unit is configured to generate the inspection image by deleting a region other than a region which has a pixel value that is greater than or equal to a threshold in the binarized reflection image and has a pixel value that is less than a threshold in the binarized transmission image.

5. The tablet inspection apparatus according to any one of Claims 2 to 4,
wherein a second tablet having a higher absorption rate of infrared light than the printed portion is enclosed in the medicine packet, and
the calculation unit is configured to: identify a region of the second tablet from the reflection image binarized by the binarization processing unit; and add an image showing the identified region of the second tablet to the inspection image.

6. The tablet inspection apparatus according to Claim 5, wherein the second tablet is a circanetten (registered trademark) tablet.

7. The tablet inspection apparatus according to any one of Claims 1 to 6,
wherein the one of the two films is a colored film and the other is a transparent film.

8. The tablet inspection apparatus according to Claim 7, wherein the infrared light is light having a wavelength range of 750 nm to 950 nm.

9. The tablet inspection apparatus according to any one of Claims 1 to 8, further comprising
a tablet counting unit configured to count the number of tablets enclosed in the medicine packet by counting the number of regions of tablets included in the inspection image.

10. The tablet inspection apparatus according to any one of Claims 1 to 9,
wherein the placing unit is a placing board having a transparent portion on which the medicine packet is placed.

11. The tablet inspection apparatus according to Claim 10, wherein the transparent portion of the placing board includes a transparent plate having a louver structure.

12. The tablet inspection apparatus according to any one of Claims 1 to 11,
wherein the reflected illumination unit includes a reflector in a dome shape which reflects infrared light.

13. A tablet inspection method comprising:
preparing a medicine packet made of two films which enclose at least one or more tablets, one of the two films having a printed portion, and the one or more tablets having lower absorption rate of infrared light than the printed portion;
obtaining a transmission image by imaging the medicine packet from a side of the other of the two films, in a state where the transmitted illumination unit is emitting infrared light to the medicine packet from a side of the one of the two films;
obtaining a reflection image by imaging the medicine packet from the side of the other, in a state where the reflected illumination unit is emitting infrared light to the medicine packet from the side of the other; and
generating an inspection image from a difference image between the reflection image and the transmission image, and inspecting the one or more tablets based on the inspection image.

14. The tablet inspection method according to Claim 13, wherein the inspection image is generated from the difference image binarized by a binarization processing unit.

15. The tablet inspection method according to Claim 13, wherein the inspection image is generated from a difference image between the reflection image and the transmission image that are binarized by the binarization processing unit.

16. The tablet inspection apparatus according to any one of Claims 13 to 15,
wherein a second tablet having higher absorption rate of infrared light than the printed portion is enclosed in the medicine packet, and
a region of the second tablet is identified from the reflection image binarized by the binarization processing unit, an image showing the identified region of the second tablet is added to the inspection image, and the one of more tablets are inspected based on the inspection image to which the image showing the region of the
second tablet is added.

17. The tablet inspection method according to Claim 16, wherein the second tablet is a circanetten (registered trademark) tablet.

## Amended claims

### Amended claims under Art. 19.1 PCT

**1.** A tablet inspection apparatus comprising:
a placing unit on which a medicine packet made of two films which enclose at least one or more tablets is placed, one of the two films having a printed portion and the other having no printed portion, and the one or more tablets having lower absorption rate of infrared light than the printed portion;
a transmitted illumination unit configured to emit infrared light;
a reflected illumination unit configured to emit infrared light;
a camera unit configured to: obtain a transmission image by imaging the medicine packet from a side of the other, in a state where the transmitted illumination unit is emitting infrared light to the medicine packet from a side of the one of the two films; and obtain a reflection image by imaging the medicine packet from the side of the other, in a state where the reflected illumination unit is emitting infrared light to the medicine packet from the side of the other; and
a calculation unit configured to: generate an inspection image by deleting the printed portion from a difference image between the reflection image and the transmission image; and inspect the one or more tablets based on the inspection image.

**2.** The tablet inspection apparatus according to Claim 1, further comprising
a binarization processing unit configured to binarize an image, wherein the calculation unit is configured to generate the inspection image from the difference image binarized by the binarization processing unit.

**3.** The tablet inspection apparatus according to Claim 1, further comprising
a binarization processing unit configured to binarize an image, wherein the calculation unit is configured to generate the inspection image from the difference image between the reflection image and the transmission image that are binarized by the binarization processing unit.

**4.** The tablet inspection apparatus according to Claim 3, wherein the calculation unit is configured to generate the inspection image by deleting a region other than a region which has a pixel value that is greater than or equal to a threshold in the binarized reflection image and has a pixel value that is less than a threshold in the binarized transmission image.

**5.** The tablet inspection apparatus according to any one of Claims 2 to 4,
wherein a second tablet having a higher absorption rate of infrared light than the printed portion is enclosed in the medicine packet, and
the calculation unit is configured to: identify a region of the second tablet from the reflection image binarized by the binarization processing unit; and add an image showing the identified region of the second tablet to the inspection image.

**6.** The tablet inspection apparatus according to Claim 5, wherein the second tablet is a circanetten (registered trademark) tablet.

**7.** The tablet inspection apparatus according to any one of Claims 1 to 6,
wherein the one of the two films is a colored film and the other is a transparent film.

**8.** The tablet inspection apparatus according to Claim 7, wherein the infrared light is light having a wavelength range of 750 nm to 950 nm.

**9.** The tablet inspection apparatus according to any one of Claims 1 to 8, further comprising
a tablet counting unit configured to count the number of tablets enclosed in the medicine packet by counting the number of regions of tablets included in the inspection image.

**10.** The tablet inspection apparatus according to any one of Claims 1 to 9,
wherein the placing unit is a placing board having a transparent portion on which the medicine packet is placed.

**11.** The tablet inspection apparatus according to Claim 10, wherein the transparent portion of the placing board includes a transparent plate having a louver structure.

**12.** The tablet inspection apparatus according to any one of Claims 1 to 11,
wherein the reflected illumination unit includes a reflector in a dome shape which reflects infrared light.

**13.** A tablet inspection method comprising:
preparing a medicine packet made of two films which enclose at least one or more tablets, one of the two films having a printed portion and the other having noprinted portion, and the one or more tablets having lower absorption rate of infrared light than the printed portion;
obtaining a transmission image by imaging the medicine packet from a side of the other, in a state where the transmitted illumination unit is emitting infrared light to the medicine packet from a side of the one of the two films;
obtaining a reflection image by imaging the medicine packet from the side of the other, in a state where the reflected illumination unit is emitting infrared light to the medicine packet from the side of the other; and
generating an inspection image by deleting the printed portion from a difference image between the reflection image and the transmission image, and inspecting the one or more tablets based on the inspection image.

**14.** The tablet inspection method according to Claim 13, wherein the inspection image is generated from the difference image binarized by a binarization processing unit.

**15.** The tablet inspection method according to Claim 13, wherein the inspection image is generated from a difference image between the reflection image and the transmission image that are binarized by the binarization processing unit.

**16.** The tablet inspection apparatus according to any one of Claims 13 to 15,
wherein a second tablet having higher absorption rate of infrared light than the printed portion is enclosed in the medicine packet, and
a region of the second tablet is identified from the reflection image binarized by the binarization processing unit, an image showing the identified region of the second tablet is added to the inspection image, and the one of more tablets are inspected based on the inspection image to which the image showing the region of the second tablet is added.

**17.** The tablet inspection method according to Claim 16, wherein the second tablet is a circanetten (registered trademark) tablet.
